# EUROPEAN PATENT SPECIFICATION

(11) **EP 1 005 265 B1**
(45) Date of publication and mention of the grant of the patent: **09.01.2008**
(21) Application number: 99919448.3
(22) Date of filing: 11.05.1999
(51) Int. Cl.: A01G 25/02

(54) **LOW DISCHARGE EMITTERS**
BEWÄSSERUNGSAUSLÄSSE MIT NIEDRIGEM DURCHFLUSS
GOUTTEURS A FAIBLE DEBIT

(30) Priority: 12.05.1998 GR 98100173
(43) Date of publication of application: 07.06.2000
(73) Proprietor: Dermitzakis, Emmanuil, 15669 Athens (GR)
(72) Inventor: Dermitzakis, Emmanuil, 15669 Athens (GR)
(86) International application number: PCT/GR1999/000019
(87) International publication number: WO 1999/057962

(56) References cited:
- EP-A- 0 535 877
- EP-A- 0 636 309
- WO-A-96/24243
- WO-A-98/10635
- US-A- 4 215 822
- US-A- 4 655 397
- US-A- 5 609 303

## Description

The present invention refers to emitters used in irrigation systems. The emitters are widely known, are applied on side hoses of a relatively small diameter and are designed for supplying small quantities of water to the roots of plants and trees. These side hoses are supplied by a central water supply network. Characteristic cases of such emitters are given in patents US 4,215,822, EP.05355877 A2, US 4,655,397, PCT GR/96/0004, US.4600,152 which refer to emitters of a meander-like (labyrinth) water path. The problem with these known emitters is that they deliver a relatively high quantity of water, so that the small diameters of the side hoses, onto or into which the emitters are placed, cannot supply a large number of emitters. For this reason, the lateral hoses are not allowed to have a long application length, and the area for irrigation is divided in several parts with side emitter hoses of a shorter length. Thus, the central water supply network necessary for the supply of these parts is expensive and has a large cross section. Furthermore, the simultaneous irrigation of large areas with the same pumping complex is not possible, and the process of alternate irrigation is applied by installing additional networks and gate valves requiring continuous monitoring, increased labour costs, etc.

However, in order to reduce the water discharge of one emitter, so that the application length of the lateral hoses is increased, the cross section of the meander-like path of the emitter must be reduced, thus increasing the risks of blockage of the meander-like paths by foreign material transported along with water. As the blockages constitute the most important problem associated with emitters, the construction of low discharge emitters was so far impossible.

In each meander-like path, due to the continuous change of direction of the water, discrete zones exist, such as the real flow zone which is wide enough and has a wavelike form and the eddy zone. None of the above patents have specified, studied and traced the essential, real and primary water flow path inside the wider area of the meander-like path. Thus, any intervention for increasing the pressure drop that would result in a reduction of the discharge were symptomatic, dangerous for blockage and had a dubious result. Thus, any effort to reduce the cross section of the path, so far, implied a blockage risk.

The patent PCT/Gr/96/0004 refers to circular or straight edges raised up to some height in parallel to the bottom. A three dimensional wave movement is attempted and expected without separating the real flow from the eddy current. The US Patent 4,600,152 features a large number of channels which are identical and active. The water passes simultaneously from all channels and a total pressure drop is attempted with the assistance only of the phenomenon of continuous separation and reunion of the large number of parallel streams. Theoretically, the proposed solution for reducing the discharge does not apply. It is known, that when a stream is separated into several parallel streams of the same cross section, the total friction between the water inlet and outlet are reduced, rather than increased. Due to the large number of parallel channels, the speed of the water is reduced excessively in the individual channels. It is not possible, though, to expect an increase of the pressure drop and a reduction of the discharge due to the separation and reunion of low speed water streams. The result will be exactly the opposite. Water discharge will be increased. In practice, such a construction due to the large number of channels would be excessively large, and hence expensive.

Furthermore, no stand-by or security channel is prevised, as all the channels are absolutely necessary for the operation of the emitter.

The present invention permits the construction of emitters of very low water discharge, as it allows primary and real water flow paths of a very high performance and stand-by water paths. These stand-by paths which are normally inactive are connected in parallel to the primary paths of the emitter and have a far larger cross section, so that no blockage problem exists. They are activated automatically and restore the water flow as a by pass in each location of the primary path that would be blocked.

### Brief Description of the Invention

The present invention refers to high performance, low discharge emitters of a meander-like form, formed by the addition of a vane interfering between the vertical edges of two successive reflectors of the meander-like path. Normally, the vane interferes almost parallel to the primary water flow direction, does not come into contact with the meander like paths and the reflectors, and forms two channels around it for the possible passage of water from one path unit to the other. One channel is narrow and short, whereas the other is wide and longer. Despite the existence, though, of the above mentioned channels, the water due to the geometry of the reflectors, only passes through the short and narrow channel of the path unit, the other one remaining standing by and inactive. As all the water quantity passes through one narrow channel only, it is subject to very intensive friction from all sides of the channel, and hence significant pressure drops, thus drastically decreasing the discharge of the emitter.

The flow of water in the present invention follows at all points a particular and strictly defined wave-like corridor, i.e. the corridor formed by all the successive narrow channels of the path, which is the principal and active corridor.

The other parallel corridor formed by all the other successive wide channels is a stand-by one and completely inactive. Hence, its bottom can be lowered, and the corridor may have twice the depth of the active corridor. This essential increase of the depth of the inactive part of the flow, increases the overall cross section of the emitter which is the sum of the active and the inactive cross section and also increases the strength of the emitter in the case of blockage.

In the bevel parts of the wavelike corridor, which may also be inclined, in the direction of the flow and almost parallel to the internal side of the reflectors, additional guiding vanes are added, or longitudinal rectangular parts and step-ups. These additional parts end in sharp edges at the positions of change of direction of the water, i.e. in the regions of the horizontal parts of the wavelike corridor.

The lines of flow do not follow a uniform and symmetrical path, but are continuously interrupted resulting in a continuous increase of the length of their flow path and the friction between them. With the new invention a significant pressure drop of water flow is achieved so that the water discharge of the emitter is drastically reduced, and so that in each unit of the path, the availability of a stand-by path is ensured connected in parallel and which is automatically activated as a by-pass in the case of blockage or temporary obstruction in the principal narrow operating high performance principal and active channel.

Another advantage deriving due to the presence of this stand-by channel, is that in the regions of very low water pressure, e.g. at the end of irrigation hoses, the flow is not fully developed the water velocity is very low and the water simultaneously passes from both parallel channels, both the principal one and the stand-by one, resulting in an increase of the overall water discharge of the emitter.

Thus, the emitter has an almost horizontal characteristic discharge curve with respect to pressure, implying that the discharge is not affected by pressure fluctuations in the network.

### Description of the drawings

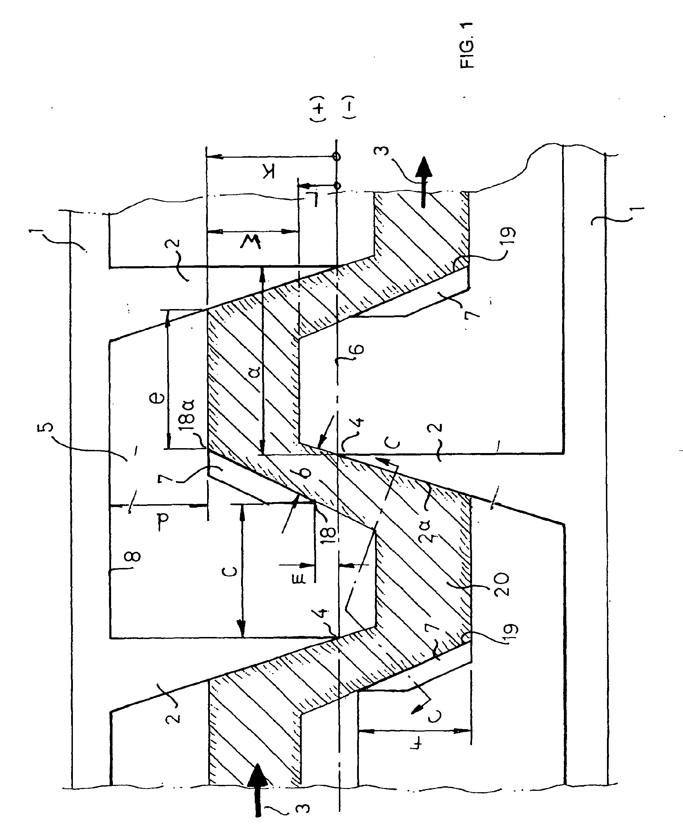

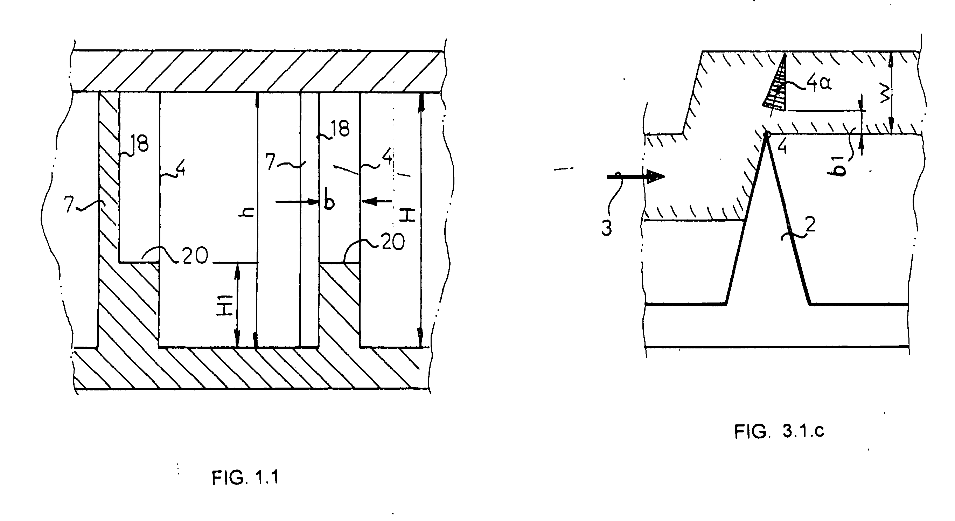

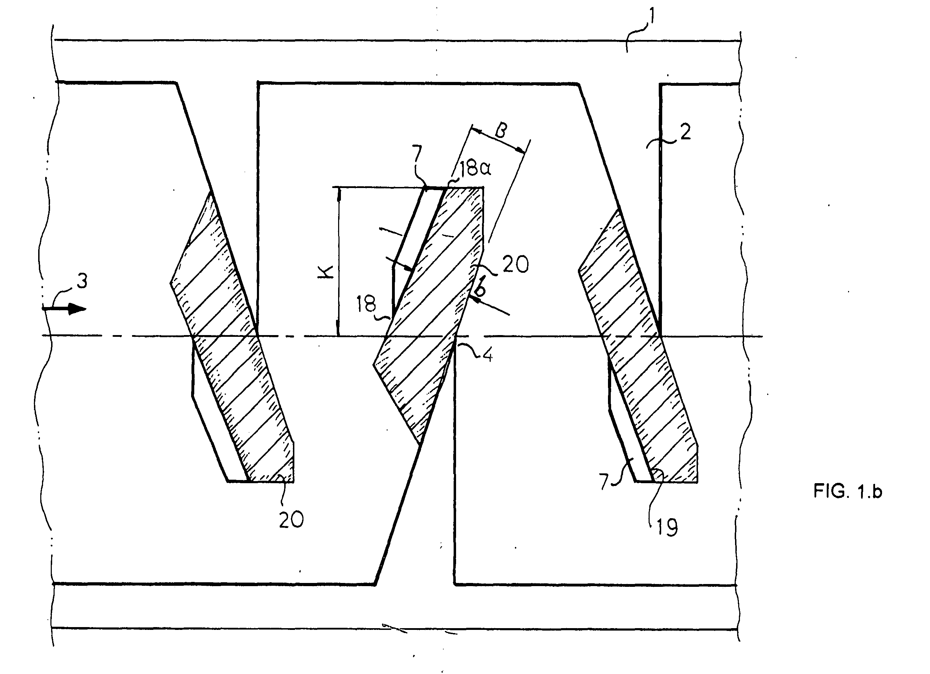

Drawing 1. illustrates the new emitter with primary saw like forms, a vane and the primary water path having a different height than the secondary one.

Drawing 1.1. Cross section of the emitter of drawing 1

Drawing 1.b. Emitter with a vane and with the bottom of the primary path raised, though with an interruption of the raised parts in the horizontal parts of the primary path.

Drawing 2. Emitter where the bottom of the primary wavelike path is inclined is its bevel parts, raised in the region of the vane.

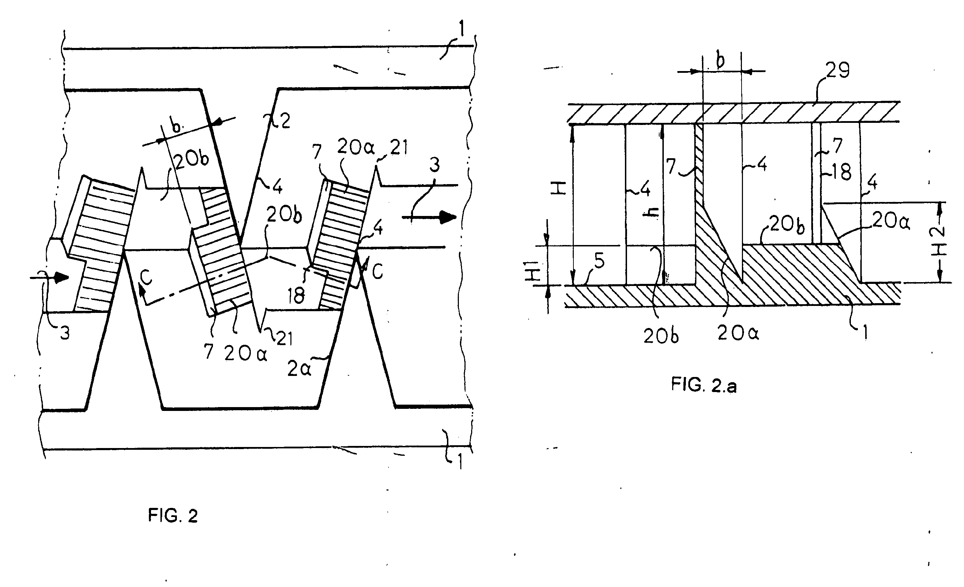

Drawing 2.a. Cross section of Drawing 2.

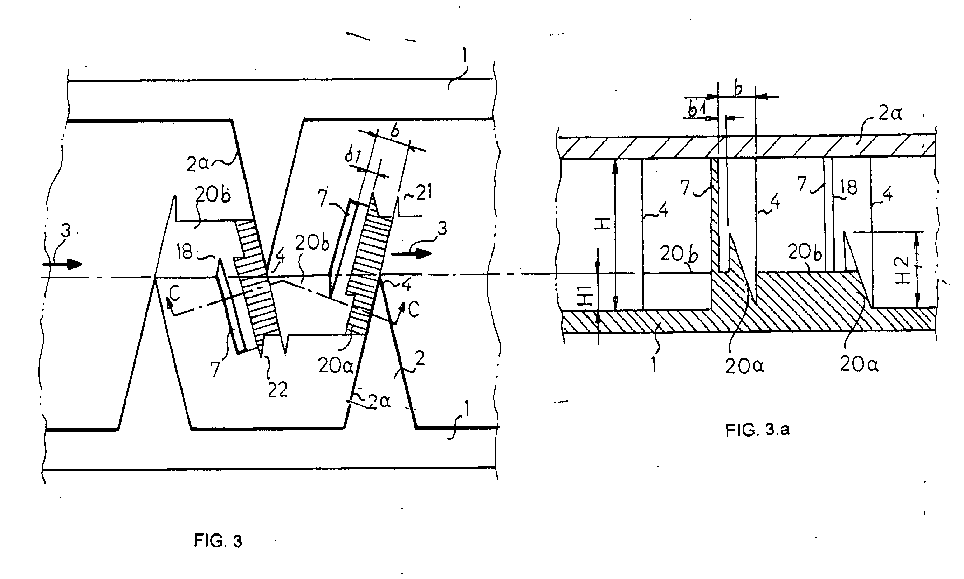

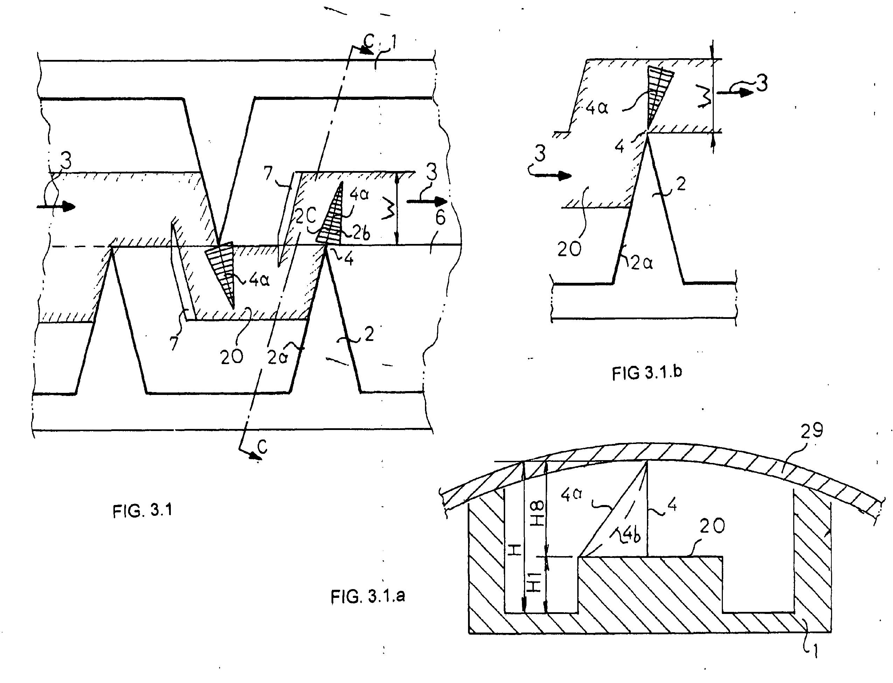

Drawing 3 Variation of the emitter of Drawing 2, where the inclined part of the path, it does not touch the vane.

Drawing 3.a. Cross section of Drawing 3.

Drawing 3.1. Emitter with a vane where in the horizontal part of the primary path a triangular pyramid is added

Drawing 3.1.a Cross section of Drawing 3.1

Drawing 3.1.b Variation of Drawing 3.1 with the pyramid positioned opposite to the edge 4.

Drawing 3.1.c. Variation of Drawing 3.1

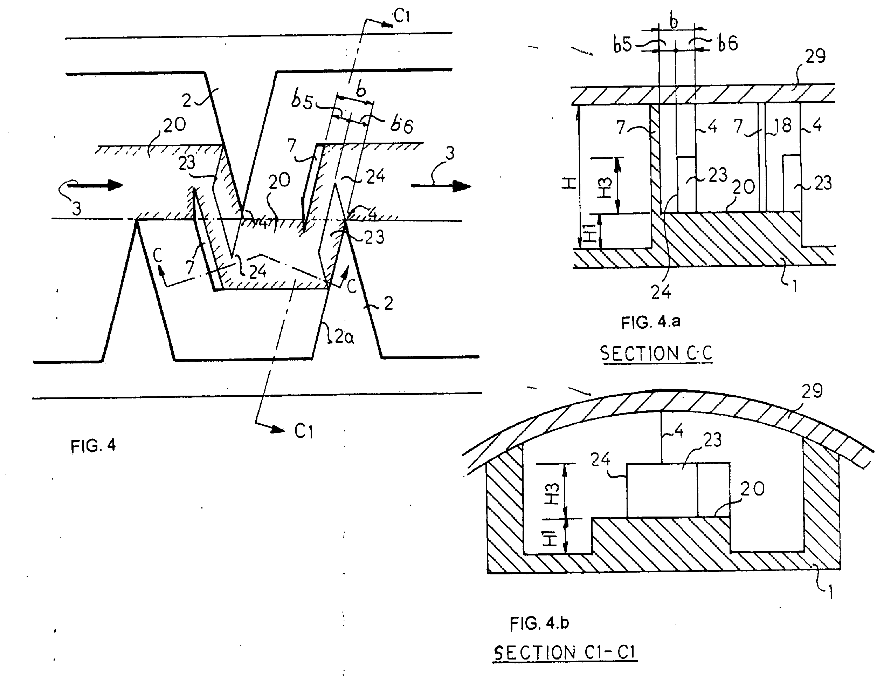

Drawing 4. Emitter with a vane where a step-up is added in the bevel part of the primary path.

Drawing 4.a. Cross section of Drawing 4.

Drawing 4.b. Cross section of Drawing 4.

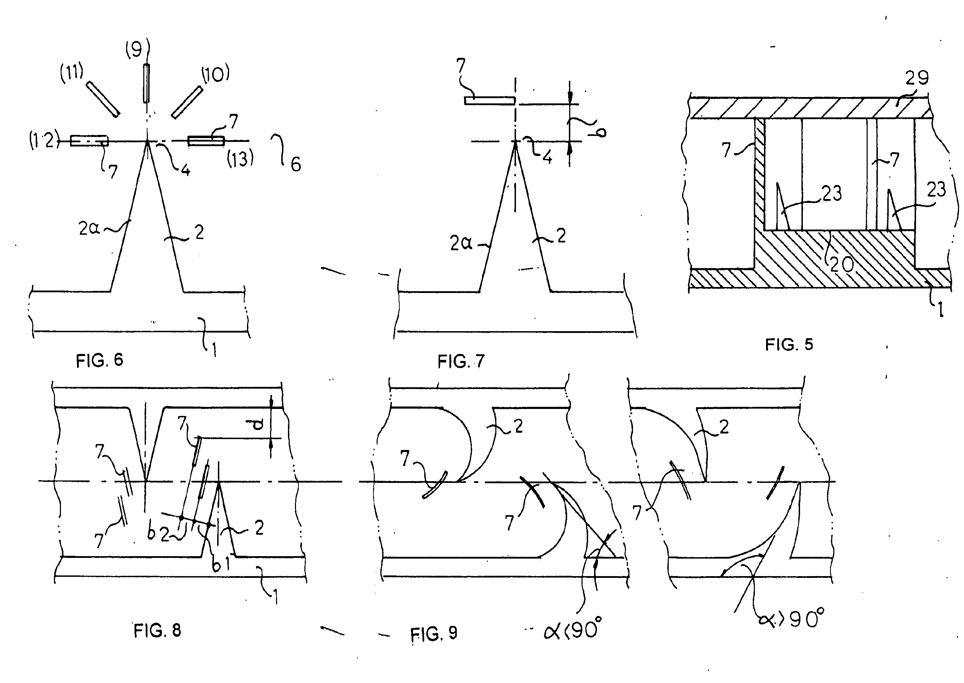

Drawing 5. Cross section of emitter with a vane where in the bevel part of the primary path, a triangular prism is added.

Drawing 6. Emitter of the new invention with alternative positions of the vane.

Drawing 7. Emitter with a vane parallel to the axial line.

Drawing 8. Emitter with two vanes one behind the other.

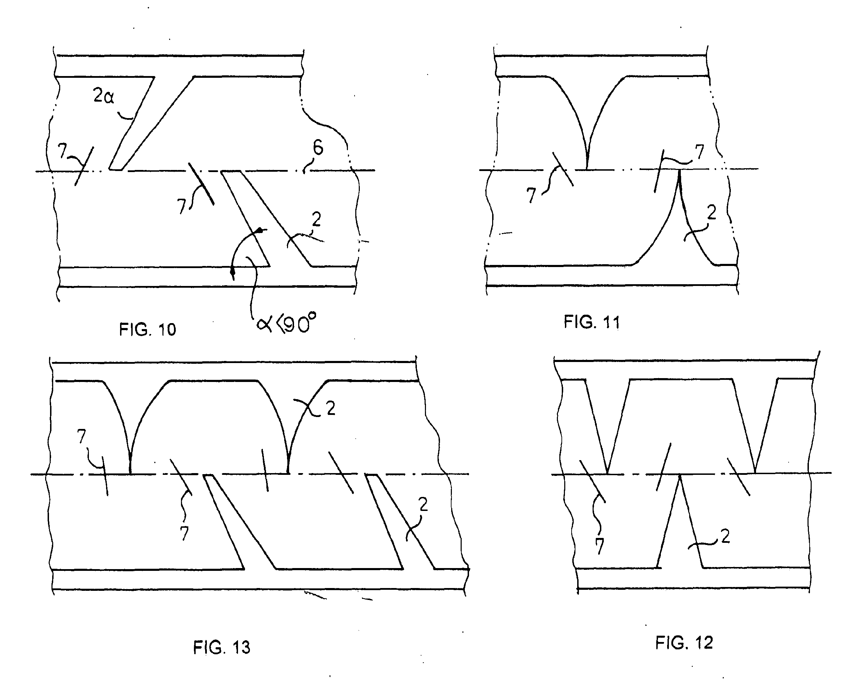

Drawing 9. Emitter with a vane and primary saw like form-flow reflector of a curved shape.

Drawing 10, 11, 12. Emitters with a vane and different variations with respect to the primary saw like forms-flow reflectors.

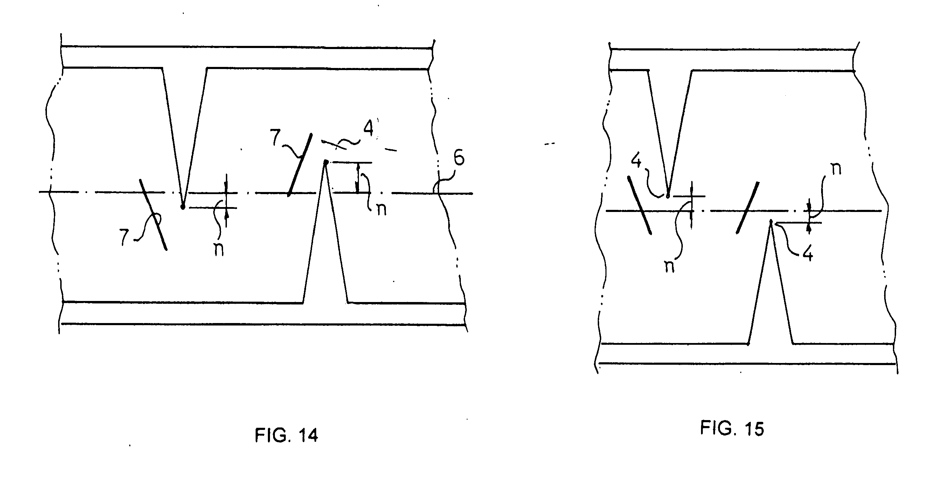

Drawing 13. Emitter with a vane and non-symmetrical primary parallel rows of the saw like forms.

Drawing 14. Variation with a meander-like path, where the edges of the primary meander like form extend further than the axial line 6 of the meander like path.

Drawing 15. Variation with a meander like path, where the edges of the primary meander like form are at the same distance from the axial line of the meander like path.

### Detailed description of the invention

Drawing 1 illustrates an emitter 1 with a meander-like path of a long length, formed by two parallel series of primary saw like forms-reflectors 2 of a triangular or trapezoidal shape 2, vertical to its bottom. The series are positioned one opposite to the other, with their sharp edges 4 of their primary saw like forms-reflectors 2 turned towards the axial line 6 of the meander-like path, and each sharp edge 4 is turned towards the cavity 5 formed between two successive primary saw like forms-reflectors 2, of the opposite series. All the edges 4 are parallel, located near the axis 6 of the meander-like path, have a distance or width a between them, and have a height H.

Between the edge 4 of the form 2 and the rear side 8 of the cavity formed, in the opposite series, a new thin longitudinal form 7 is positioned, of a length f, vertical to the bottom of the meander like path, as a guiding vane or a small island, of a height h not in contact with the aforementioned parallel series of the forms-reflectors 2. The inlet edge 18 of the vane 7 is at a distance m from the axial line 6. Its values m vary between (-) 0.3a to (+) 0.3a. The negative sign implies that the edge 18 may extend under the axial line 6, i.e. inside the cavity 5 of the opposite side. The vane 7 forms two channels around it for possible water passage: the channel with a width b between the edge 4 of the primary form 2, and the channel with widths d between the rear side 8 of the cavity 5, and c and e between the sides of two successive primary forms-reflectors 2.

The widths c, d and e are almost equal to each other and equal to 0.5 to 0.9a, the width b is far smaller and equal to 0.3 to 0.6 a, whereas the height H is almost equal to 0.6 to 2.0 a.

As observed in Drawing 1, both the position of the vane 7, as well as its geometrical shape, in combination with the direction of the water flow 3 and with the design of the primary forms-reflectors 2, and in particular of the internal side 2a, located in the front of the flow 3, contribute towards the whole quantity of water to pass through the narrow channel with the width b. It is evident that the inlet edges 18 and the internal side 19 of the vane 7, along with the side 2a of the shape 2 which is in the front of the flow 3, cause a very intensive pressure drop of the water, reducing its discharge. As the water flow is only effected onto the wide and wavelike band 20 with width b in the bevel part, and W in its horizontal part, a significant increase of the depth of the other parallel and inactive part, i.e. the channel with the widths d, c, and e, increases only the overall cross section of the emitter which is the sum of the active and the inactive cross sections. Thus, only the risk of blockage of the emitter is minimised without a parallel c of the water discharge, because the increase of the depth only concerns one inactive water path.

In the narrow channel between the vane 7, the band 20, the side 2a and the internal surface of the hose, for the first time, the eddy zones do not exist and are replaced by high speed real flow lines. For the first time essential friction of the real flow lines is achieved simultaneously in the four surfaces surrounding the flow. Thus, the overall discharge of the new emitter compared with the discharge of any 2 other common emitter with saw like forms and a width a or b, without though the vane 7, would be far smaller. The outlet edge 18a of the vane 7 is located at a distance K from the axial line. The horizontal part of the band 20 is enclosed, between the two lines parallel to the axial line 6, where one passes from the outlet edge 18α, and the other at a distance L relative to the axial line 6. The relationships: L = (-) 0.3 to 0.4a hold. The negative sign implies that the band 20 also extends below the axial line 6. Furthermore, K is almost equal 0.6 to 1.0a, W=K-L, and H1=0.2 to 0.8H. With respect to the height of the vane 7, the relationship: H 1 ≤ h ≤ H holds.

In all other regions surrounding the vane 7 and the band 20, i.e. in the channel with the widths c, d and e, irrespectively of their larger depth, only eddy zones prevail, without any displacement of water from one cavity 5 to the next of the opposite side. This passage via the channel c, d, and e, despite its larger depth and its far larger cross section, is inactive throughout the operation, and remains stand-by.

With the intervention of the vane 7, water separation into two streams is not caused, i.e. the first via the channel b and the second via the channel c, d and e, with reunion of the channels in the sequel. This is not sought as it would not be beneficial to the invention's efforts which are the reduction of the total water discharge. The separation would act in the opposite direction by reducing overall friction and pressure drops instead of increasing them and would increase rather than decrease the water discharge via the emitter. The part between two successive edges 4 and one vane 7, constitute a unit of the long meander-like path. If, however, a blockage appears in the very narrow channel b, all the quantity of the water will necessarily pass via the channel with the widths c, d and e, which was so far due to the eddy currents inactive and stand-by, and the water will be transported to the next cavity 5 of the opposite series. The stand-by channel now operates as a by-pass. Immediately next, in the subsequent unit of the meander-like path, all the quantity of water will pass again only via the respective subsequent narrow channel b of the unit.

Furthermore, the arrangement and shape of the vanes is such, so that if blockage from foreign matter appears in the narrow channel b, the new movement of water through the stand-by cross section, i.e. the channel c, d and e, of the particular unit, acts towards decoupling and towards creating torque of new hydraulic forces which tend to detach the foreign matter that have caused the blockage. This foreign mater, following detachment, will remain in the deeper channel c, d, e, (which also has a far larger cross section) with a depth H which following the automatic unblockage and restoration of flow in the channel b will maintain its auxiliary and standing by role, and the foreign matter will rotate in place, along with the eddy currents prevailing. If the number of foreign matter particles increases, they will be removed moving only through the auxiliary path c, d and e towards the outlet of the emitter. However, if the foreign matter is large enough and in particular larger than the narrow channel b, they can neither pass through the narrow b, nor to follow the rotational movement of the eddy currents. These large bodies will successively pass only through the auxiliary standing by path c, d, e of each unit of the long meander-like path of the emitter, and will be removed from the emitter. Thus, self-protection of the emitter for both small and large foreign matter particles is ensured.

Another advantage deriving from the presence of the stand-by channel is that in the very low pressure regions, e.g. at the ends of irrigation hoses bearing the emitters, the flow is not fuly developed low rates prevail and water discharge is effected from both parallel channels, the principal and the stand-by one, leading to an increase of the overall water discharge in the emitter. Thus, the emitter has an almost flat characteristic discharge curve with respect to the water pressure. At high pressure regions, discharge is decreased, whereas in the low pressure regions it is increased, always in comparison with an emitter that features only one path and flat bottom. Thus, the discharge is not affected significantly by the fluctuations of pressure in the water network.

If assumed that a large part of the number of narrow channels b, of the units of the meander-like path are locked, the total quantity of water flowing out of the emitter will be increased, rather than decreased, as water will almost exclusively follow the auxiliary standing by path c, d, e of each unit. Then, just by observing the increase of water discharge through some emitters, it is recognised that blockage occurs, and without risking the life of the plants, which will continue to be watered, the chemical de-blocking will be attempted. Chemical de-blocking involves the supply of acids in small quantities to the emitters along with the irrigation water. Following de-blocking, the water discharge of the emitters will be again reduced, i.e. the discharge returns to its nominal value.

In the case of other known emitters, if blockage of even one unit of the long meander-like path occurs, flow to the emitter is completely interrupted and no chemical method is capable of de-blocking it. It is known that the chemical cleansing of an emitter is possible only if a minimum water flow exists from the inlet to the outlet of the emitter.

Drawing 1.1 illustrates a cross section of Drawing 1 with the hose 29 and the inactive path deeper by H1 compared with the band 20.. For the sake of simplicity, all the cross sections are drawn in the direction C-C and vertical to the side 2a located in front and opposite the flow 3 of the water..

Drawing 1.b. illustrates a variation where the bottom of the primary path 20 has a larger depth at its horizontal parts. These horizontal parts of the band 20 have the depth H of their primary cavity 5.

Drawing 2 illustrates a variation with a vane where the bottom 20 of the primary path is not horizontal and flat with a uniform height in all parts, but features an inclination in the bevel part 20a of its path. In the region of the vane 7 it is raised by a distance H2 and in the region of the side 2a, it is lowered. In the horizontal part 20b of the path 20, the bottom remains flat with a height H1. In the intersection of the horizontal part 20b and the inclined part 20a, the part 20b bears an edge 21 vertical to the bottom 5, of a height H1. The edge 21 causes an additional pressure drop in the water flow passing in the lower part of the inclined 20a until the height H1. With this new arrangement, the flow currents divide and the total length of the paths of the individual currents of the primary path 20, 20a of the water, are increased, independently of whether they pass at a low level, up to the height H1, or higher than that. In low currents up to height H1, apart from the change of direction of the flow, a twirl of the currents themselves is observed. The result of this new form is that friction in water currents get even more evident and the final discharge is reduced. The following relations hold: H2=0.2 tol. 0 H, and H 1 ≤ h ≤ H.

In another variation, the inclination of the part 20a, could be exactly opposite, i.e. the raised part could be on the side 2a. The horizontal part 20b remains a horizontal plane of a height H1, only the internal side 2a becomes inclined in one part of its height towards the vane 7, whereas the internal side 19 of the vane 7 remains vertical to the bottom. This variation has not been drawn. In another variation, a combination of the above two different variations could be implemented. This implies an inclination from both the side of the reflector 2, as well as from the side of the vane 7. (Not drawn).

Drawing 2.a illustrates a cut C-C of Drawing 2.

Drawing 3 illustrates a variation of Drawing 2 where the inclined plane 20a does not touch the vane 7, but leaves a small void space b1. This form will provide us the ability to form another edge 22 at the end of the inclined part 20a for additional pressure drop of the water of higher currents (These currents pass higher than height H1).

Drawing 3.a illustrates the cut C-C of Drawing 3.

Drawing 3.1 illustrates another variation where the free cross section of the primary path 20 with a height H-H1 is not reduced at its bevel part, but in the horizontal one, with the width W. In particular, at the end of the reflector 2, as a continuation of the edge 4, a thin triangular pyramid-vane is placed onto the path 20 with the edge 4a almost in the same line with the side 2a, and the sides 2b and 2c to the right and left. The height of the pyramid H8 ranges between 0.2 to 1.0 (H-H1).

Drawing 3.1.a illustrates a cut of the Drawing 3.1 with the hose 29. The curved line 4b illustrates another possible form of the edge 4a, in order to increase its length. Drawing 3.1.b illustrates another variation of Drawing 3.1 where the triangular pyramid is positioned opposite to the edge 4, but with an opposite direction, i.e. with the edges 4 and 4a forming an angle with the apex onto the band 20.

In another variation, Drawings 3.1 and 3.1.b could be combined so that the pyramid of Drawing 3.1.b is positioned opposite to the pyramid of Drawing 3.1. Then, a new shape would be formed where the two similar edges 4a of the pyramids would form an angle with an apex onto the band 20, as in Drawing 3.1b. The cross section for water passage between the pyramids would have the form of an isosceles triangle with the two equal sides having a length 4a (not drawn). In general, all pyramids operate as an additional vane, similar to vane 7.

Drawing 3.1.c illustrates a variation of Drawing 3.1 where the triangular pyramid is at a distance b1 from the edge 4. In another variation the pyramid could be a simple vane, such as vane 7, with a triangular or other shape, positioned in parallel, to the right or left of the side 2a, and not as a continuation of it as in Drawing 3.1. The relationship: b1 = 0.2 to 0.4a holds (not drawn).

Drawing 4 illustrates a variation where the free cross section of the primary path 20 with a height H -H1 and width b, is reduced in its bevel part with the addition of a rectangular step-up 23 of a height H3 and width b6. The step-up 23 is adjacent to the internal side 2a of the reflector and ends at an edge 24 for additional reduction of the pressure of water in the lower parts of the path. Here, as in Drawings 2 and 3, the currents of water of the primary path 20 are broken and are twirled.

The relationships: H3 = 0.2 to 0.8(H-H1), b6=0.2 to 0.6b; hold. In another variation, the step-up may only touch the vane 7 and be at a distance from the side 2a. (not drawn).

Drawings 4.a and 4b illustrate two cuts C-C and C1-C1 respectively of drawing 4.

In another variation of Drawing 4 the rectangular step-up is neither adjacent to the vane 7 nor to the internal side 2a of the reflector, but is displaced almost in parallel to the channel in the direction of the vane 7.

That means it forms two separate parallel or diverging channels, one with the side 2a, and one with the vane 7. (not drawn).

Drawing 5 illustrates a cut of the previous variation where instead of the rectangular step-up, a triangular, prism seats onto the bevel part of the flat surface of the primary cross section 20, without any contact with the sides on either side. The plan view of the variation is not drawn.

In another variation the rectangles, the step-ups, the triangular prisms and the pyramids of Drawing 2, Drawing 3, Drawing 3.1, Drawing 3.1.b, Drawing 3.1.c, Drawing 4, Drawing 5, and of the similar not drawn variations, seat onto the bottom of the emitter, without raising the primary water path 20 relative to the stand-by one. That means that the bottom of the active and the inactive path has the same height. The respective plan views have not been drawn.

Drawing 6 illustrates characteristic positions of the vane 7, for example in position (9) the vane 7 is found exactly opposite to the edge 4. In positions (10) and (11) the vane 7 is positioned radially with respect to the edge 4, whereas in positions (12) and (13) the vane 7 is almost horizontal, to the right or left of the edge 4.

Drawing 7 illustrates another characteristic position where the vane 7 is parallel to the axial line 6.

Drawing 8 illustrates an emitter of the present invention with two vanes, one behind the other. All the quantity of water passes regularly via the narrow void space b1. The void space b2 has the same dimensions as b1 and operates as a stand-by one. In the case of blockage of b1, all the quantity of water will pass through b2. The void space d has a width larger than b1 and b2, and operates as known as standing by in succession of b1 and b2, together with the passages c and e.

In general, the application of the present invention may extend to all shapes of meander-like paths where successive change of direction of the water is observed, with any shape of reflectors as illustrated in the following drawings:
Drawing 9 illustrates a variation with a curved reflector, with different outlet angles of the water α. The angle may be larger or smaller than 90 degrees.
Drawings 10, 11, 12 illustrate different other variations with symmetric primary saw like forms with different reflectors and different angles α for water outlet. The relationships:15 degrees< α < 160 degrees.
Drawing 13 illustrates a variation with a non-symmetrical primary meander-like form. It is self evident that in relation to the various shapes of primary meander-like paths and reflectors, other vane forms 7 apart from the longitudinal one derive (Not drawn).
Drawing 14 illustrates a variation with a meander-like path, where the edges 4 of the primary saw like form 2, extend further than the axial line 6 of the meander-like path from where they are at an equal distance η. The relationship η=0 to 0.3a, holds.
Drawing 15 illustrates a variation where the edges 4 of the primary saw like form 2 do not extend to the axial line 6 of the meander-like path, wherefrom they are at a distance η. The relationship η=0 to 0.3a, holds.

In Drawings 9 to 15 the regions of the primary path 20 of the water, and the parts raised by H1 are not drawn.

Then in certain pressure regions, e.g. in the very low ones, the water could pass from both channels simultaneously, whereas when pressure is increased, i.e. in the normal operation regions, water could only pass from the primary channel b, as desired. This would in addition improve the shape of the characteristic curve «discharge versus pressures of the water, rendering it more horizontal. This implies that the discharge of the emitter will not be heavily influenced by the pressure changes in the network. Not drawn.

The relative dimensions and the relationship between size dimensions are indicative and may be increased or decreased.

In general, a vane etc. could be fitted in any emitter where a main flow region and a region of eddy currents, i.e. a secondary path is observed, and to form another variation of the present invention.

The present invention, despite the fact it is described as a longitudinal meander like path, it can be applied also to cylindrical emitters or to ON-LINE emitters or as part of self-compensating emitters. The axial line of the meander path will then have a circular or curved cross section, or any other shape necessary.

## Claims

1. Emitter featuring a meander-like path with one water inlet and one water outlet, created by two parallel series of primary saw like forms-reflectors of a triangular of trapezoidal shape (2), positioned at right angles to the bottom and opposite to each other with the sharp edges (4) of the primary forms-reflectors turned towards the axial line (6) of the meander-like path and each sharp edge (4), turned towards the cavity (5) formed between two successive primary forms-reflectors of a triangular form of the opposite series, where all the edges (4) are situated near the axial line (6) of the meander-like path, the edges (4) being at a distance (a) of one another and at a height H, **characterized by** that between the edge (4), and the rear side (8) of the cavity (5) a thin longitudinal guiding vane (7) is positioned vertical to the bottom of the emitter as a small island of a height h, almost parallel to the internal side (2a) of the reflector (2) without any contact with the aforementioned parallel sides of the primary saw like shape-reflectors (2), the vane (7) creating around it two channels with different bottom levels for possible water passage, the principal_channel with the width (b), at a level H1 above the bottom of the Emitter and the stand-by channel with the widths (c), (d) and (e), at the bottom of the Emitter, the widths of the stand-by channel being larger than the width of the principal one, while between the internal side (2a) of the reflector (2) and the parallel internal side (19) of the vane (7), as well as between the parallel passing from the outlet edge (18a) of the vane (7), and the parallel at a distance (L) from the axial line (6), a narrow wavelike band (20) which constitutes the principal water path is enclosed with a width (b) in the bevel part, and (W) in the horizontal one, at a height (H1) above the bottom of the Emitter, and the height h of the vane (7) obeying to the relationship H1≤h≤H.

2. Emitter according to claim 1 where the bottom (20) of the primary path is not flat having a uniform height H1 at all points, but inclined at the bevel part (20a) , which in the region of the vane (7) is raised by a second height H2, and it is lowered in the region of the side (2a) of the reflector (2), whereas the horizontal part (20b) remains a horizontal plane of a height H1, the part (20b) bearing an edge (21) at its interconnection with the inclined part (20a) while the edge (21) of a height (H1) is vertical to the bottom (5).

3. Emitter according to claim 2, where the inclined flat part (20a) of the primary path does not touch the vane (7), but leaves a small void space (b1), the flat part (20a) ending at an edge (22).

4. Emitter according to claim 3, where the inclined flat part (20a) of the primary path is raised relative to the region of internal side (2a) of the reflector (2) and is lowered towards the region of the vane (7).

5. Emitter according to claim 1 wherein the free cross section of the primary path (20) is reduced at its bevel part with the addition of a rectangular step-up (23) of a third height H3 and having a width (b6), which is adjacent to the internal side (2a) of the reflector and ends at an edge (24).

6. Emitter according to claim 1 wherein the free cross section of the primary path (20) is reduced at its bevel part with the addition of a rectangular step-up (23) of a third height H3 and having a width (b6), which is not adjacent to the vane (7),or the internal side (2a) of the reflector (2).

7. Emitter according to claim 1, where the free cross section of the flat, raised by a height H1, primary path is reduced in its level part with the addition of a triangular prism (23) that seats onto the bevel part of the flat surface of the primary path (20).

8. Emitter according to claim 1, where at the end of the reflector (2) and the horizontal part of the path (2C), as a continuation of the edge (4), a thin triangular pyramid-vane of a height H8 is positioned with its edge (4a), almost at the same line with the internal side (2a) of the reflector.

9. Emitter according to claim 8, where the triangular pyramid-vane is at a distance (b1) form the edge (4).

10. Emitter according to claims 1 to 9, where the reflector (2) of the meander like path (20) has a curved shape with a water outlet angle (α).

11. Emitter according to claims 1 to 10 where the two parallel series of the reflectors are non-symmetrical.

12. Emitter according to claims 1 to 11 where the edges of the reflectors of the primary saw like form are extended beyond the axial line (6) towards the cavity (5) of the opposite side.

13. Emitter according to claims 1 to 11 where the edges (4) of the reflectors of the primary saw like form have a distance (n) from the axial line (6).

14. Emitter according to claims 1 to 13 where the continuation of the bottom of the primary path (20) is interrupted at its horizontal relative to the axial line (6) parts, where it has the same depth as the stand-by channel.

15. Emitter according to claims 1 to 14 applied to a cylindrical surface.

16. Emitter according to claims 1 to 15 applied as a part of a self-compensating emitter.

## Patentansprüche

1. Tropfer der sich über eine Meanderpassage verfügt, mit einem Wassereingang und einem Wasserausgang, die sich aus zwei parallelen Reihen von primaeren saegefoermigen Reflektoren vom dreieckigen oder trapezaehnlichen Form (2) formt, die senkrecht und die eine gegenüber der anderen, auf dem Boden stehen, mit der scharfen Spitzen (4) von den primaeren saegefoermigen Reflektoren in der Richung der Mittellinie (6) der Meanderpassage, und jede scharfe Spitze (4) sich zu der Kavitaet (5) gerichtet ist, die aus zwei benachbarten primaeren saegefoermigen Reflektoren vom dreieckigen Form der gegenüber liegenden Reihen, gebildet wird, wobei alle scharfen Spitzen (4) in der Naehe der Mittellinie (6) der Meanderpassage sich befinden, wobei die Spitzen (4), eine von der anderen, einen Abstand (a) und eine Hoehe H haben, charakterisiert durch die Tatsache, dass zwischen der scharfen Spitzen (4) und der Rueckseite (4) der Kavitaet (5), eine dünne längliche Leitschaufel (7) senkrecht auf dem Boden angestellt ist, mit einer Hoehe h ungefaehr parallel zu der inneren Seite (2a) des Reflektors (2), ohne irgend eine Verbindung mit der obengennanten parallelen Seiten der primaeren saegefoermigen Reflektoren (2), wobei Leitschaufel (7) ringsherum zwei Passagen mit unterschiedlichem Boden für eventuelle Wasserpassage erzeugt, die primaere Passage mit der Breite (b), in einer Hoehe H1 oberhalb des Bodens des Tropfers, und die Ersatzpassage mit der Breiten (c), (d), (e), auf dem Boden des Tropfers, wobei die Breiten der Ersatzpassage breiter wie diejenigen der primaeren Passage sind, wobei zwischen der inneren Seite (2a) des Reflektors (2) und der parallelen inneren Seite (19) der Leitschaufel (7), als auch zwischen der Parallele die aus der Ausgangspitze (18a) der Leitschaufel (7) vorbeigeht und der Parallele in einem Abstand (L) von der Mittellinie (6), ein enger wellenförmiger Streif (20) sich bildet, der, mit einer Breite (b) im schiefen Teil und (w) in dem horizontal, die primaere Wasserpassage in einer Hoehe H1 oberhalb des Bodens des Tropfers zusammensetzt, and wobei die Hoehe h der Leitschaufel (7) die Beziehung H1≤h≤H erfüllt.

2. Tropfer nach dem Anspruch 1, wohin der Boden (20) der primaeren Wasserpassage nicht flach mit einer einheitlichen Hoehe H1 in alle ihrer Punkten ist, aber geneigt in seinem schiefen Teil (20a), der in der Umgebung der Leitschaufel (7) in einer zweiten Höhe H2 ehoben ist, und welcher in der Umgebung der Seite (2a) des Reflektors (2) sich gesenkt ist, wobei der horizontale Teil (20b) eine horizontale Ebene von einer Höhe H1 bleibt, wobei der Teil (20b), in seiner Zusammenfügung mit der schiefen Teil (20a), eine Spitze (21) aufweist, wobei die Spitze (21) mit der Höhe H1, senkrecht auf dem Boden steht.

3. Tropfer nach dem Anspruch 2, wobei der schiefer flacher Teil (20a) der primaeren Wasserpassage, die Leitschaufel (7) nicht berührt, aber eine kleine Lücke (b1) lässt, und der flacher Teil (20a) an eine Spitze (22) endet.

4. Tropfer nach dem Anspruch 3, wobei der schiefer flacher Teil (20a) der primaeren Wasserpassage, relativ zu der inneren Seite (2a) des Reflektors (2) ehoben ist, und in der Richtung der Leitschaufel (7) sich gesenkt ist.

5. Tropfer nach dem Anspruch 1, wobei der freie Querschnitt der primaeren Wasserpassage (20) in ihrer schiefen Teil reduziert ist, durch die addition einer rechteckigen Stufe (23) von einer dritten Höhe H3 mit einer Breite (b6), die die innere Seite (2a) des Reflektors berührt, und die an eine Spitze (24) endet.

6. Tropfer nach dem Anspruch 1, wobei der freie Querschnitt der primaeren Wasserpassage (20) in ihrer schiefen Teil reduziert ist, durch die addition einer rechteckigen Stufe (23) von einer dritten Höhe H3 mit einer Breite (b6), die die Leitschaufel (7) sowie die innere Seite (2a) des Reflektors (2) nicht berührt.

7. Tropfer nach dem Anspruch 1, wobei der freie Querschnitt der flachen primaeren Wasserpassage die auf eine Hoehe H1 erhoben ist, in ihrer schiefen Teil reduziert ist, durch die addition eines dreieckigen Prismas das auf der flachen Oberfläche des schiefen Teiles der primaeren Wasserpassage (20) sitzt.

8. Tropfer nach dem Anspruch 1, wobei am Ende des Reflektors (2) und des horizontalen Teils der Passage (20), als eine Verlängerung der Spitze (4), eine dünne dreieckige pyramidförmige Leitschaufel von einer Höhe H8, mit ihrer Spitze (4a) in der gleichen Richtung mit der schiefen Seite (2a) des Reflektors, orientiert ist.

9. Tropfer nach dem Anspruch 1, wobei die dreieckige pyramidförmige Leitschaufel in einem Abstand (b1) von der Spitze (4) sich befindet.

10. Tropfer nach den Anspruechen 1,9, wobei der Reflektor (2) der meanderförmigen Wasserpassage (20), eine Kurvenform mit einem Wasseraustrittswinkel (α), aufweisst.

11. Tropfer nach den Anspruechen 1,10, wobei die zwei parallelen Reihen der Reflektoren, nicht symetrisch sind.

12. Tropfer nach den Anspruechen 1 toll, wobei die Spitzen der primaeren saegefoermigen Reflektoren über die Mittellinie (6) hinaus in der Richtung der Kavität (5) verlängert sind.

13. Tropfer nach dem Anspruch 1 toll, wobei die Spitzen (4) der primaeren saegefoermigen Reflektoren in einem Abstand (n) von der Mittellinie (6) sich befinden.

14. Tropfer nach den Anspruechen 1 to13, wobei die Fortsetzung des Bodens der primaeren Wasserpassage (20), in ihren horizontalen relativ zu der Mittellinie (6) Teilen, underbrochen wird, wo sie die gleiche Tiefe wie die Erzatzpassage hat.

15. Tropfer nach den Anspruechen 1 to 14, wobei er auf einer zylindrischen Oberfläche entwickeln lässt.

16. Tropfer nach den Anspruechen 1 to15, wobei er als ein Teil einer selbstkompensierenden Tropfers verwendet wird.

## Revendications

1. Goutteur présentant une voie en forme de méandre avec une entrée et une sortie d'eau, créées par deux séries parallèles de formes primaires en scie réflecteurs de forme triangulaire ou trapézoïdale(2),posées à angles droits par rapport au fond et opposées l'une par rapport à l'autre avec les arêtes aigues (4) des formes primaires réflecteurs tournées vers la ligne axiale (6) de la voie en forme de méandre et chaque arête aigue (4), tournée vers la cavité (5) formée entre deux formes primaires en scie successives réflecteurs de forme triangulaire de la série opposée, où toutes les arêtes (4) sont situés près de la ligne axiale (6) de la voie en forme de méandre, lesquelles arêtes (4) étant à une distance (a) entre elles et à une hauteur H, **caractérisée** du fait qu'entre l'arête (4), et le coté derrière (8) de la cavité (5) un aileron guideur fin longitudinal (7) est posé, verticalement par rapport au fond du goutteur comme un petit îlot d'une hauteur h, presque parallèle au coté intérieur (2a) du réflecteur (2) sans aucun contact avec les séries parallèles de formes primaires en scie-réflecteurs susmentionnées (2), lequel aileron (7) créant autour de lui deux canaux de niveau de fond différent pour le passage possible de l'eau, le canal principal avec une largeur (b), à un niveau au-dessus du fond du goutteur et le canal de réserve aux largeurs (c), (d), et e, au fond du goutteur, les largeurs du canal de réserve étant plus larges que la largeur du canal principal, tandis qu'entre le coté interne (2a) du réflecteur (2) et le coté parallèle intérieur (19) de l'aileron (7), ainsi qu'entre le parallèle qui passe par l'arête de sortie (18a) de l'aileron (7), et le parallèle à une distance (L) de la ligne axiale (6), une bande étroite ondoyante est comprise (20) qui constitue la voie principale d'eau avec une largeur (b) sur la partie oblique, et (W) sur la partie horizontale, à une hauteur H1 au-dessus du fond du goutteur, et la hauteur de l'aileron(7) obéit à la relation H1≤h≤H.

2. Goutteur selon la revendication 1 où le fond (20) de la voie principale n'est pas plane avec une hauteur unique H1 sur tous ses points, mais incliné sur la partie oblique (20a), qui dans la région de l'aileron (7) est surélevé d'une deuxième hauteur (H2), est abaissé dans la partie 2b du réflecteur (2), tandis que la partie horizontale (20b) reste une partie horizontale plane d'une hauteur de H1, la partie (20b) portant une arête (21) sur son interconnections avec la partie inclinée (20a) tandis que l'arête (21) d'une hauteur de (H1) est verticale par rapport au fond (5).

3. Goutteur selon la revendication 2, où la partie plane inclinée (20a) de la voie principale ne touche pas à l'aileron (7), mais elle laisse un petit écart (b₁) et laquelle partie plane (20a) arrive à son terme sur une arête (22).

4. Goutteur selon la revendication 3, où la partie plane inclinée (20a) de la voie principale est surélevée par rapport à région du coté intérieur (2a) du réflecteur (2) et est abaissée vers la région de l'aileron (7).

5. Goutteur selon la revendication 1 où la coupe transversale libre de la voie primaire 20 est réduite à sa partie oblique par l'addition d'un parallélépipédique (23) d'une hauteur (H3) et de largeur (b6) , qui est tangent au coté intérieur (2a) du réflecteur et arrive à une arête (24).

6. Goutteur selon la revendication 1 où la coupe transversale de la voie primaire (20) est réduite à sa partie oblique par une addition d'un seuil parallélépipède (23) d'une troisième hauteur H3 et ayant une largeur (b6(, qui n'est pas tangent ni à l'aileron 7, ni au coté intérieur (2a) du réflecteur (2).

7. Goutteur selon la revendication 1, où la coupe transversale de la partie plane, élevée par une hauteur H1, la voie principale est réduite à sa partie oblique par l'addition d'un prisme triangulaire qui se pose sur la partie oblique de la surface plane de la voie primaire (20).

8. Goutteur selon la revendication 1, où au terme du réflecteur 2 et sur la partie horizontale de la voie (20), comme une continuation de l'arête (4), est posée une pyramide fine triangulaire aileron d'une hauteur (H8) avec son arête (4a), environ sur la même droite que le coté incliné (2a.) du réflecteur.

9. Goutteur selon les revendications 8 où la pyramide triangulaire-aileron est à une distance (b1) de l'arête (4).

10. Goutteur selon les revendications 1 à 9, où le réflecteur (2) de la voie en forme de méandre (20) a une forme en courbe formant un angle avec la sortie de l'eau (a).

11. Goutteur selon les revendications 1 à 10, où les deux séries parallèles du réflecteur sont asymétriques.

12. Goutteur selon les revendications 1 à 11 où les arêtes des réflecteurs de la voie primaire en forme de scie s'étendent au-déla de la ligne axiale (6) vers la cavité (5) du coté opposé.

13. Goutteur selon les revendications 1 à 11 où les arêtes (4) des réflecteurs de la voie primaire en forme de scie ont une distance (n) de la ligne axiale (6).

14. Goutteur selon les revendications 1 à 13 où la continuation du fond de la voie primaire (20) est interrompue à son horizontale relative aux parties de la ligne axiale, où il a la même profondeur que le canal de réserve.

15. Goutteur selon les revendications 1 à 14 appliqué sur une surface cylindrique.

16. Goutteur selon les revendications 1 à 15 appliqué comme partie d'un goutteur auto-compansateur.
